# EUROPEAN PATENT SPECIFICATION

(11) **EP 1 613 567 B1**
(45) Date of publication and mention of the grant of the patent: **19.09.2007**
(21) Application number: 04717616.9
(22) Date of filing: 05.03.2004
(51) Int. Cl.: C04B 40/00

(54) **COMPOSITION**
ZUSAMMENSETZUNG
COMPOSITION

(30) Priority: 07.04.2003 GB 0307948
(43) Date of publication of application: 11.01.2006
(73) Proprietor: Construction Research & Technology GmbH, 83303 Trostberg (DE)
(72) Inventor: ZAMPINI, Davide, CH-2552 Orpun (CH); WEIBEL, Martin, CH-8048 Zürich (CH); WALLISER, André, CH-4133 Pratteln (CH); OPPLIGER, Max, CH-4123 Allschwil (CH)
(86) International application number: PCT/EP2004/002255
(87) International publication number: WO 2004/089852

(56) References cited:
- EP-A- 0 641 746
- PATENT ABSTRACTS OF JAPAN vol. 1997, no. 05, 30 May 1997 (1997-05-30) & JP 9 020540 A (SHIN ETSU CHEM CO LTD), 21 January 1997 (1997-01-21)

## Description

This invention relates to chemical compositions which bring about improvements in the properties of cementitious compositions.

The chemical composition comprises a fluid blend of
(i) at least one polyalkylene oxide, the alkylene oxide units being ethylene and propylene oxides;
(ii) at least one aqueous paraffin emulsion; and
(iii) at least one siloxane compound that is at least one of liquid and soluble in at least one of water and aqueous alkali.

EP-A-0 641 746 discloses an admixture composition comprising a paraffin emulsion, a poly(alkylene oxide) and a plasticizer which may be siloxane-modified.

By "siloxane compound" is meant any siloxane-based material, that is, a material having a linear or branched siloxane backbone chain of the form -SiR^{a}R^{b}-O-SiR^{c}R^{d}-O-. Any such material will work in this invention, provided that it is liquid or at least slightly soluble in at least one of water and aqueous alkali.

Siloxane compounds for use in this invention are selected from those that correspond to the general formula I 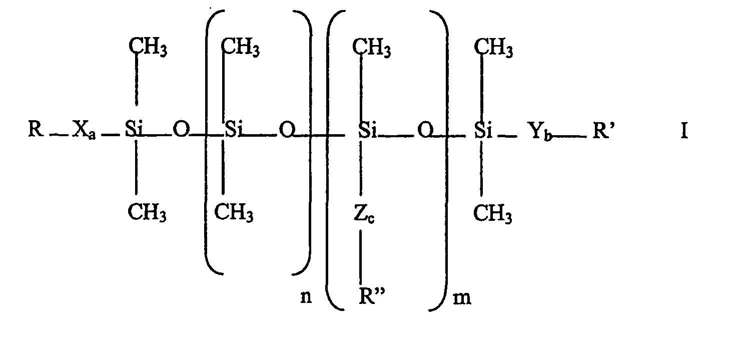 where m and n are independently from 1-2000, preferably from 1-500 and more preferably from 1-200, a, b, and c are independently either 0 or 1 and X, Y and Z are selected from
-O-;
-O-(CH₂)₁₋₃₀-, this moiety being at least one of linear, branched and containing at least one ring;
-(CH₂)₁₋₃₀-, this moiety being at least one of linear, branched and containing at least one ring;
-CH₂-CH₂-CH₂-O-;
-CH₂-CH₂-CH₂-O-CH₂-CHOH-CH₂-;
-CH₂-CH₂-CH₂-O-CH₂-CHOH-CH₂-O-;
-CH₂-CH₂-CH₂-O-CH₂-CHOH-CH₂-N-;
and R, R' and R" are independently selected from at least one of hydrogen, C₁₋₁₀₀ alkyl, C₆₋₃₀ aryl, C₇₋₃₀ aralkyl; C₇₋₃₀ alkaryl; C₁₋₃₀ hydroxyalkyl; C₃₋₂₀₀ polyhydroxyalkyl; polyether consisting of from 2-200 identical or different C₁₋₁₅ oxyalkylene units; C₁₋₃₀ aminoalkyl; polyiminopolyalkylene having from 1-20 identical or different C₂₋₁₅ alkylene units; polyiminopolyoxyalkylene having from 1-20 identical or different C₂₋₁₅ oxyalkylene units; C₃₋₃₀ quaternary ammonium, optionally completely or partially ionised with at least one anion; C₄₋₃₀ betaine; carboxyl, optionally completely or partially ionised with any suitable cation; C₄₋₃₀ polycarboxyalkyl, optionally completely or partially ionised with at least one cation; sulpho group, optionally completely or partially ionised with at least one cation; thiosulpho group, optionally completely or partially ionised with at least one cation; epoxide group; glycidyl; acrylate; C₁₋₃₀ ester; polyester consisting of from 2-200 C₂₋₁₅ diacid and diester monomer units; and esters of inorganic acids, all alkyl chains being at least one of linear, branched and comprising at least one ring.

A more preferred class of siloxane compounds comprises those of Formula I in which a, b, and c are all 1 and X, Y and Z are selected from
-O-(CH₂)₁₋₃₀-, this moiety being linear or branched;
-(CH₂)₁₋₃₀-, this moiety being linear or branched;
-CH₂-CH₂-CH₂-O-CH₂-CHOH-CH₂-;
and R, R' and R" are independently selected from at least one of hydrogen; hydroxy; polyether consisting of from 2-200 identical or different C₂₋₆ oxyalkylene units, with the proviso that, if there is present more than one type of oxyalkylene unit, there shall be present at least two of each unit; C₃₋₃₀ quaternary ammonium, optionally completely or partially ionised with at least one anion; C₄₋₃₀ betaine; carboxyl, optionally completely or partially ionised with at least one cation; sulpho group, optionally completely or partially ionised with at least one cation; thiosulpho group, optionally completely or partially ionised with at least one cation; glycidyl; and acrylate; all alkyl chains being at least one of linear, branched and comprising at least one ring.

An even more preferred class of siloxane compounds comprises those of Formula I in which m and n are independently selected from 1-200, a, b, and c are all 1 and X, Y and Z are selected from
-O-(CH₂)₁₋₁₂-;
-(CH₂)₁₋₁₂-;
-CH₂-CH₂-CH₂-O-CH₂-CHOH-CH₂-;
and R, R' and R" are independently selected from at least one of hydrogen; hydroxy; polyether consisting of from 2-200 identical or different C₂₋₆ oxyalkylene units, with the proviso that, if there is present more than one type of oxyalkylene unit, there shall be present at least two of each unit; C₃₋₃₀ quaternary ammonium, optionally completely or partially ionised with at least one anion; C₄₋₃₀ betaine; carboxyl, optionally completely or partially ionised with at least one cation; glycidyl; and acrylate; all alkyl chains being capable of being linear or branched.

An even more preferred class of siloxane compounds comprises those of Formula I in which m is from 1-30 and n is from 1-100, a, b, and c are all 1 and X, Y and Z are selected from
-O-(CH₂)₁₋₆-;
-(CH₂)₁-6-;
-CH₂-CH₂-CH₂-O-CH₂-CHOH-CH₂-;
and R, R' and R" are independently selected from at least one of hydrogen; hydroxy; polyether consisting of from 2-200 identical or different C₂₋₆ oxyalkylene units, with the proviso that, if there is present more than one type of oxyalkylene unit, there shall be present at least two of each unit; C₃₋₂₀ quaternary ammonium, optionally completely or partially ionised with at least one anion; C₄₋₁₀ betaine and carboxyl, optionally completely or partially ionised with at least one cation; all alkyl chains being capable of being linear or branched.

The siloxanes hereinabove described may be any such material known to the art. Such materials are well known to the art for a variety of purposes, one of these being as antifoams in various industries. The preferred materials are those where R and R' are methyl or ethyl, n is from 5-200, more preferably from 10-150 and most preferably from 40-100, and m is from 1-100, more preferably from 2-40 and most preferably from 5-10.

The two different types of siloxane units may be arranged randomly or in blocks on the molecule. It is possible to utilise more than one type of moiety R". Examples of R" include ethylene oxide - propylene oxide copolymers of from 10 to 100 units.

The siloxanes that are useful in the present invention may either be incorporated into a dry cementitious composition, or they may be added to such a composition when it is mixed with water immediately prior to placement. The quantity required depends on the type of cement and the precise nature of the siloxane, but a typical range of weight proportions is from 0.05%-20% by weight of the weight of the cement, more preferably from 0.1-5%, even more preferably from 0.1-2% and most preferably from 0.2-1%.

In a further embodiment of the invention, the siloxane may be used in conjunction with hydrophobic, finely-divided silica. This can be added to the composition separately from the siloxane, but it is preferred that it be incorporated into the siloxane by, for example, blending or mixing. The quantity of silica can be up to 20% by weight of the siloxane, preferably no more than 10%. In a yet further embodiment of the invention, the siloxane may additionally contain emulsifier. Any suitable emulsifiers may be used in art-recognised quantities. Some commercially-available emulsifiers already contain emulsifier, so addition may be unnecessary.
Preferably the polyalkylene oxide is polyethylene oxide. The weight-average molecular weight is from 100,000-8,000,000, preferably from 2,000,000-5,000,000.

There are many types of paraffin emulsions available and any of these may be used in the working of the invention. By "paraffin emulsion" is meant an aqueous emulsion of a higher alkane having a fusion point above ambient temperature, which upon drying of the emulsion does not form a film in the sense that a paint forms a film (see also Römpp "Chemie Lexikon", 9th edition (Thieme Verlag 1989), volume 1, page 102, the contents of which are incorporated herein by reference). The emulsion may be stabilised by any convenient means, but it is preferable to use an ionically-emulsified (preferably anionically-stabilised) paraffin mixture (fusion point of 45-51 °C) with a particle size of less than 2µM. Examples of such paraffin emulsions are "Mobilcer" 55 or "Mulrex" 62 from Mobil and "Ubatol" FPG 860 from Cray Valley and "Tecol" BC 60/40 from Trüb Emulsion Chemie.

The concentrations of the three ingredients and water in the chemical composition are shown below (as percentages by weight of the total composition). In some cases, the blend of the three ingredients is sufficiently fluid to make any water unnecessary, but generally some water is necessary, sometimes in relatively high proportion (when, for example, the polyethylene oxide is of high molecular weight).

| | Widest limits | preferred | more preferred |
|---|---|---|---|
| siloxane | 5-60 | 10-50 | 20-40 |
| paraffin wax | 10-70 | 20-60 | 30-50 |
| polyethylene oxide | 0.1-5 | 0.2-2 | 0.5-1.5 |
| water | 0-80 | 20-70 | 30-50 |

The three materials may be mixed into a dry cement, mortar or concrete mix, to which water need only be added. They are added collectively to a cementitious mix when water is being added, prior to final use. The three are combined (with water if necessary) in a single admixture. The material has a long shelf life and is ready for use without any prior preparation.
In use, the chemical composition is added in a quantity of from 0.01-100% by weight on cement. The water content may be varied over wide limits, depending on the effect desired. It is preferred to have relatively little water content, i.e., preferably less than 50% by weight of the composition. In such a case, the preferred quantity by weight on cement is from 0.05-10%, more preferably from 0.1-3% and most preferably from 0.2-2%.

The use of the composition has a considerable and highly beneficial effect on any cementitious composition in which it is incorporated. Not only is the shrinkage and cracking decreased or even eliminated, as hereinabove described, but there may also be noticeable improvements in properties such as freeze-thaw resistance and permeability, and there can also be a significant plasticising effect. The nature and extent of improvement will depend on the type of cementitious mix and the natures and concentrations of the various constituent raw materials, but there is always some enhancement. The invention therefore also provides a method of modifying the properties of a cementitious composition, comprising adding to a fluid cementitious mix a chemical composition as hereinabove described. The invention further provides a cementitious composition having improved properties, which composition comprises a chemical composition as hereinabove described.

In addition to the one or three materials hereinabove described, there can also be added to the cementitious mix materials known to the art for the performance of particular functions, in art-recognised quantities. Such materials include (but are not limited to) plasticisers and superplasticisers, accelerators, antifreeze agents, pigments, air-entraining agents, retarders and reinforcing fibres of metal, glass or polymer.

The invention is further described with reference to the following non-limiting examples.

A number of materials are tested in a standard concrete mix, the mix design being as follows:
Cement 450 kg/m³
Aggregate

| | |
|---|---|
| 0-4mm | 990 kg/m³ |
| 4-8 mm | 660 kg/m³ |

Water-to-cement ratio = 0.47

The materials tested are as follows:
- Admixture 1 -: a blend of a commercial paraffin wax emulsion ("Tecol" BC 60/40 from Trüb Emulsion Chemie) and a polyethylene oxide of MW 4,000,000 ("Polyox" (trade mark) 301 from Union Carbide), the blend containing 40% by weight paraffin emulsion and 1% polyethylene oxide
- Admixture 2 -: Admixture 1 + siloxane (a polyether siloxane wherein m+n=75, having on average per molecule 6.5 ethylene oxide/propylene oxide side chains of MW 1800)
- Admixture 3 -: a commercial neopentyl glycol-based shrinkage reducing agent.
- Admixture 4 -: a commercial shrinkage-reducing agent which is a blend of polyoxyalkylene ethers.

In all cases, 1% admixture by weight of cement is used, except in the case of Admixture 2, where 1% each of Admixture 1 and siloxane are used.

The drying free shrinkage is measured by German Standard Test Method DIN 52 450. The results are shown in the following table:

| **Drying free shrinkage (mm/m)** | | | | | |
|---|---|---|---|---|---|
| Age (days) | No admixture | Admixture 1 | Admixture 2 | Admixture 3 | Admixture 4 |
| 1 | 0 | 0 | 0 | 0 | 0 |
| 3 | 0.068 | 0.077 | -0.044 | 0.026 | -0.011 |
| 7 | 0.173 | 0.177 | -0.004 | 0.129 | 0.046 |
| 14 | 0.233 | 0.226 | 0.028 | 0.203 | 0.127 |
| 21 | 0.283 | 0.294 | 0.066 | 0.234 | 0.157 |
| 28 | 0.328 | 0.329 | 0.102 | 0.272 | 0.213 |
| 38 | 0.365 | 0.359 | 0.121 | 0.282 | 0.223 |
| 58 | 0.416 | 0.423 | 0.193 | 0.35 | 0.281 |
| 67 | 0.433 | 0.428 | 0.233 | 0.387 | |
| 87 | 0.473 | 0.485 | 0.271 | 0.389 | 0.341 |

It can be seen that the performance of Admixture 2 is appreciably better than that of the other admixtures. It is particularly noteworthy that the shrinkage performance of Admixture 1 goes from being the worst to the best, when it is augmented by siloxane to give Admixture 2. In addition, it is found that the cementitious mix flows better and that the final cementitious composition is less permeable to water than an identical composition but without the chemical composition.

## Claims

1. A composition for improving the properties of a cementitious composition, comprising a fluid blend of
(i) at least one polyalkylene oxide, the alkylene oxide units being ethylene and propylene oxides;
(ii) at least one aqueous paraffin emulsion; and
(iii) at least one siloxane compound that is at least one of liquid and soluble in at least one of water and aqueous alkali, wherein the siloxane is selected from those that correspond to the general formula I: 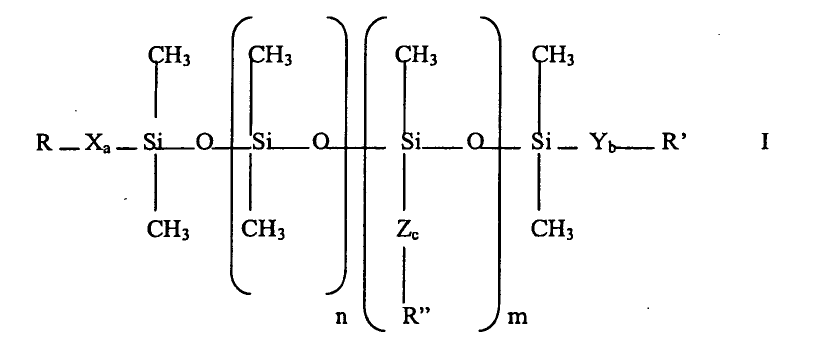
where m and n are independently from 1-2000, preferably from 1-500 and more preferably from 1-200, a, b, and c are independently either 0 or 1 and X, Y and Z are selected from
-O-;
-O-(CH₂)₁₋₃₀-, this moiety being at least one of linear, branched and containing at least one ring;
-(CH₂)₁₋₃₀-, this moiety being at least one of linear, branched and containing at least one ring;
-CH₂-CH₂-CH₂-O-;
-CH₂-CH₂-CH₂-O-CH₂-CHOH-CH₂-;
-CH₂-CH₂-CH₂-O-CH₂-CHOH-CH₂-O-;
-CH₂-CH₂-CH₂-O-CH₂-CHOH-CH₂-N-; and R, R' and R" are independently selected from at least one of hydrogen, C₁₋₁₀₀ alkyl, C₆₋₃₀ aryl, C₇₋₃₀ aralkyl; C₇₋₃₀ alkaryl; C₁₋₃₀ hydroxyalkyl; C₃₋₂₀₀ polyhydroxyalkyl; polyether consisting of from 2-200 identical or different C₁₋₁₅ oxyalkylene units; C₁₋₃₀ aminoalkyl; polyiminopolyalkylene having from 1-20 identical or different C₂₋₁₅ alkylene units; polyiminopolyoxyalkylene having from 1-20 identical or different C₂₋₁₅ oxyalkylene units; C₃₋₃₀ quaternary ammonium, optionally completely or partially ionised with at least one anion; C₄₋₃₀ betaine; carboxyl, optionally completely or partially ionised with any suitable cation; C₄₋₃₀ polycarboxyalkyl, optionally completely or partially ionised with at least one cation; sulpho group, optionally completely or partially ionised with at least one cation; thiosulpho group, optionally completely or partially ionised with at least one cation; epoxide group; glycidyl; acrylate; C₁₋₃₀ ester; polyester consisting of from 2-200 C₂₋₁₅ diacid and diester monomer units; and esters of inorganic acids, all alkyl chains being at least one of linear, branched and comprising at least one ring.

2. A composition according to claim 1, in which the siloxane is selected from those of Formula I in which a, b, and c are all 1 and X, Y and Z are selected from
-O-(CH₂)₁₋₃₀-, this moiety being linear or branched;
-(CH₂)₁₋₃₀-, this moiety being linear or branched;
-CH₂-CH₂-CH₂-O-CH₂-CHOH-CH₂-;
and R, R' and R" are independently selected from at least one of hydrogen; hydroxy; polyether consisting of from 2-200 identical or different C₂₋₆ oxyalkylene units, with the proviso that, if there is present more than one type of oxyalkylene unit, there shall be present at least two of each unit; C₃₋₃₀ quaternary ammonium, optionally completely or partially ionised with at least one anion; C₄₋₃₀ betaine; carboxyl, optionally completely or partially ionised with at least one cation; sulpho group, optionally completely or partially ionised with at least one cation; thiosulpho group, optionally completely or partially ionised with at least one cation; glycidyl; and acrylate; all alkyl chains being at least one of linear, branched and comprising at least one ring.

3. A composition according to claim 1 or claim 2, in which the siloxane is selected from those of Formula I in which m and n are independently selected from 1-200, a, b, and c are all 1 and X, Y and Z are selected from
-O-(CH₂)₁₋₁₂-;
-(CH₂)₁₋₁₂-;
-CH₂-CH₂-CH₂-O-CH₂-CHOH-CH₂-;
and R, R' and R" are independently selected from at least one of hydrogen; hydroxy; polyether consisting of from 2-200 identical or different C₂₋₆ oxyalkylene units, with the proviso that, if there is present more than one type of oxyalkylene unit, there shall be present at least two of each unit; C₃₋₃₀ quaternary ammonium, optionally completely or partially ionised with at least one anion; C₄₋₃₀ betaine; carboxyl, optionally completely or partially ionised with at least one cation; glycidyl; and acrylate; all alkyl chains being capable of being linear or branched.

4. A composition according to any one of claims 1-3, in which the siloxane is selected from those of Formula I in which m is from 1-30 and n is from 1-100, a, b, and c are all 1 and X, Y and Z are selected from
-O-(CH₂)₁₋₆-;
-(CH₂)₁₋₆-;
-CH₂-CH₂-CH₂-O-CH₂-CHOH-CH₂-;
and R, R' and R" are independently selected from at least one of hydrogen; hydroxy; polyether consisting of from 2-200 identical or different C₂₋₆ oxyalkylene units, with the proviso that, if there is present more than one type of oxyalkylene unit, there shall be present at least two of each unit; C₃₋₂₀ quaternary ammonium, optionally completely or partially ionised with at least one anion; C₄₋₁₀ betaine and carboxyl, optionally completely or partially ionised with at least one cation; all alkyl chains being capable of being linear or branched.

5. A composition according to any one of claims 1-4 in which the polyalkylene oxide is polyethylene oxide.

6. A composition according to any one of claims 1-5 in which the weight-average molecular weight of the polyalkylene oxide is 100,000-8,000,000, preferably 2,000,000-5,000,000.

7. A composition according to any one of claims 1-6 in which the paraffin emulsion is an ionically-emulsified paraffin mixture with a fusion point of 45-51°C and a particle size of less than 2µM.

8. A method of modifying the properties of a cementitious composition, comprising adding to a fluid cementitious mix a composition according to any one of claims 1-7.

9. A cementitious mix having improved properties, which composition comprises a chemical composition according to claims 1-7.

## Patentansprüche

1. Zusammensetzung zur Verbesserung der Eigenschaften einer zementartigen Zusammensetzung, umfassend ein flüssiges Gemisch von
(i) mindestens einem Polyalkylenoxid, wobei die Alkylenoxideinheiten Ethylen- und Propylenoxide sind;
(ii) mindestens einer wässrigen Paraffinemulsion und
(iii) mindestens einer Siloxanverbindung, die mindestens eines ist von flüssig und löslich in mindestens einem von Wasser und wässrigem Alkali, wobei das Siloxan ausgewählt ist aus denen, die der allgemeinen Formel 1 entsprechen: 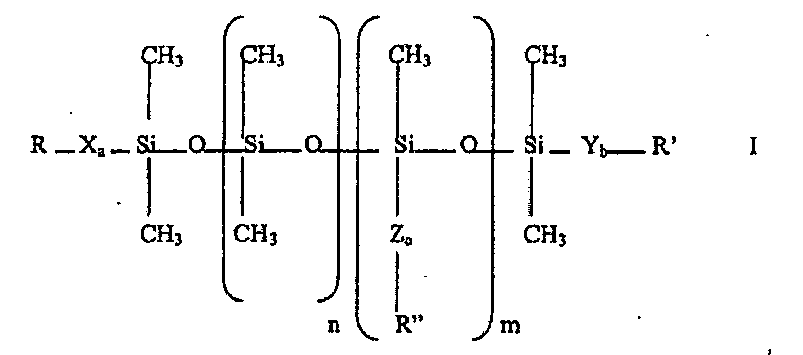
wobei m und n unabhängig für 1 bis 2000, vorzugsweise 1 bis 500 und besonders bevorzugt 1 bis 200 stehen, a, b und c unabhängig entweder für 0 oder 1 stehen, und X, Y und Z ausgewählt sind aus
-O-;
-O-(CH₂)₁₋₃₀-, wobei dieser Rest mindestens eines ist von linear, verzweigt und mindestens einen Ring enthaltend;
-(CH₂)₁₋₃₀-, wobei dieser Rest mindestens eines ist von linear, verzweigt und mindestens einen Ring enthaltend;
-CH₂-CH₂-CH₂-O-;
-CH₂-CH₂-CH₂-O-CH₂-CHOH-CH₂-;
-CH₂-CH₂-CH₂-O-CH₂-CHOH-CH₂-O-;
-CH₂-CH₂-CH₂-O-CH₂-CHOH-CH₂-N-;
und R, R' und R" unabhängig ausgewählt sind aus mindestens einem von Wasserstoff, C₁₋₁₀₀-Alkyl, C₆₋₃₀-Aryl, C₇₋₃₀-Aralkyl; C₇₋₃₀-Alkylaryl; C₁₋₃₀-Hydroxyalkyl; C₃₋₂₀₀-Polyhydroxyalkyl; Polyether, bestehend aus von 2 bis 200 identischen oder verschiedenen C₁₋₁₅-Oxyalkyleneinheiten; C₁₋₃₀-Aminoalkyl; Polyiminopolyalkylen, das 1 bis 20 identische oder verschiedene C₂₋₁₅-Alkyleneinheiten aufweist; Polyiminopolyoxyalkylen, das 1 bis 20 identische oder verschiedene C₂₋₁₅-Oxyalkyleneinheiten aufweist; C₃₋₃₀ quartäres Ammonium, gegebenenfalls vollständig oder teilweise ionisiert mit mindestens einem Anion; C₄₋₃₀-Betain; Carboxyl, gegebenenfalls vollständig oder teilweise ionisiert mit einem beliebigen geeigneten Kation; C₄₋₃₀-Polycarboxyalkyl, gegebenenfalls vollständig oder teilweise ionisiert mit mindestens einem Kation; Sulfogruppe, gegebenenfalls vollständig oder teilweise ionisiert mit mindestens einem Kation; Thiosulfogruppe, gegebenenfalls vollständig oder teilweise ionisiert mit mindestens einem Kation; Epoxidgruppe; Glycidyl; Acrylat; C₁₋₃₀-Ester; Polyester, bestehend aus von 2 bis 200 C₂₋₁₅-Disäure- und -Diestermonomereinheiten und Estern von anorganischen Säuren, wobei alle Alkylketten mindestens eines sind von linear, verzweigt und mindestens einen Ring umfassend.

2. Zusammensetzung nach Anspruch 1, in der das Siloxan ausgewählt Ist aus solchen der Formel I, in denen a, b und c alle für 1 stehen und X, Y und Z ausgewählt sind aus
-O-(CH₂)₁₋₃₀-, wobei dieser Rest linear oder verzweigt ist;
-(CH₂)₁₋₃₀-, wobei dieser Rest linear oder verzweigt ist;
-CH₂-CH₂-CH₂-O-CH₂-CHOH-CH₂;
und R, R' und R" unabhängig ausgewählt sind aus mindestens einem von Wasserstoff; Hydroxy; Polyether, bestehend aus von 2 bis 200 identischen oder verschiedenen C₂₋₆-Oxyalkyleneinheiten mit der Maßgabe, dass wenn mehr als ein Typ einer Oxyalkyleneinheit vorliegt, mindestens zwei von jeder Einheit vorliegen; C₃₋₃₀ quartäres Ammonium, gegebenenfalls vollständig oder teilweise ionisiert mit mindestens einem Anion; C₄₋₃₀-Betain; Carboxyl, gegebenenfalls vollständig oder teilweise ionisiert mit mindestens einem Kation; Sulfogruppe, gegebenenfalls vollständig oder teilweise ionisiert mit mindestens einem Kation; Thiosulfogruppe, gegebenenfalls vollständig oder teilweise ionisiert mit mindestens einem Kation; Glycidyl und Acrylat; wobei alle Alkylketten mindestens eines sind von linear, verzweigt und mindestens einen Ring umfassend.

3. Zusammensetzung nach Anspruch 1 oder Anspruch 2, in der das Siloxan ausgewählt ist aus solchen der Formel I, in der m und n unabhängig ausgewählt sind aus von 1 bis 200, a, b und c alle für 1 stehen und X, Y und Z ausgewählt sind aus
-O-(CH₂)₁₋₁₂-;
-(CH₂)₁₋₁₂-;
-CH₂-CH₂-CH₂-O-CH₂-CHOH-CH₂-
und R, R' und R" unabhängig ausgewählt sind aus mindestens einem von Wasserstoff; Hydroxy; Polyether, bestehend aus von 2 bis 200 identischen oder verschiedenen C₂₋₆-Oxyalkyleneinheiten mit der Maßgabe, dass wenn mehr als ein Typ einer Oxyalkyleneinheit vorliegt, mindestens zwei von jeder Einheit vorliegen; C₃₋₃₀ quartäres Ammonium, gegebenenfalls vollständig oder teilweise ionisiert mit mindestens einem Anion; C₄₋₃₀-Betain; Carboxyl, gegebenenfalls vollständig oder teilweise ionisiert mit mindestens einem Kation; Glycidyl und Acrylat; wobei alle Alkylketten im Stande sind linear oder verzweigt zu sein.

4. Zusammensetzung nach einem der Ansprüche 1 bis 3, in der das Siloxan ausgewählt ist aus solchen der Formel I, in der m für von 1 bis 30 steht und n für von 1 bis 100 steht, a, b und c alle für 1 stehen und X, Y und Z ausgewählt sind aus
-O-(CH₂)₁₋₆-;
-(CH₂)₁₋₆-;
-CH₂-CH₂-CH₂-O-CH₂-CHOH-CH₂-;
und R, R' und R" unabhängig ausgewählt sind aus mindestens einem von Wasserstoff; Hydroxy; Polyether, bestehend aus von 2 bis 200 identischen oder verschiedenen C₂₋₆-Oxyalkyleneinheiten mit der Maßgabe, dass wenn mehr als ein Typ einer Oxyalkyleneinheit vorliegt, mindestens zwei von jeder Einheit vorliegen; C₃₋₂₀ quartäres Ammonium, gegebenenfalls vollständig oder teilweise ionisiert mit mindestens einem Anion; C₄₋₁₀-Betain und Carboxyl, gegebenenfalls vollständig oder teilweise ionisiert mit mindestens einem Kation; wobei alle Alkylketten im Stande sind linear oder verzweigt zu sein.

5. Zusammensetzung nach einem der Ansprüche 1 bis 4, in der das Polyalkylenoxid für Polyethylenoxid steht.

6. Zusammensetzung nach einem der Ansprüche 1 bis 5, in der das gewichtsmittlere Molekulargewicht des Polyalkylenoxids 100.000 bis 8.000.000, vorzugsweise 2.000.000 bis 5.000.000, beträgt.

7. Zusammensetzung nach einem der Ansprüche 1 bis 6, in der die Paraffinemulsion ein ionisch-emulgiertes Paraffingemisch mit einem Schmelzpunkt von 45 bis 51 °C und einer Teilchengröße von weniger als 2 µm ist.

8. Verfahren zur Modifizierung der Eigenschaften einer zementartigen Zusammensetzung, umfassend eine Zugabe einer Zusammensetzung nach einem der Ansprüche 1 bis 7 zu einem flüssigen zementartigen Gemisch.

9. Zementartiges Gemisch, das verbesserte Eigenschaften aufweist, wobei die Zusammensetzung eine chemische Zusammensetzung nach einem der Ansprüche 1 bis 7 umfasst.

## Revendications

1. Composition pour améliorer les propriétés d'une composition cimentaire, comprenant un mélange fluide constitué
(i) d'au moins un oxyde de polyalkylène, les motifs oxyde d'alkylène étant des oxydes d'éthylène et de propylène ;
(ii) d'au moins une émulsion de paraffine aqueuse; et
(iii) d'au moins un composé siloxane qui est au moins un composé liquide et soluble dans au moins un constituant parmi l'eau et un composé alcalin aqueux,
dans laquelle le siloxane est choisi parmi ceux qui répondent à la formule générale I : 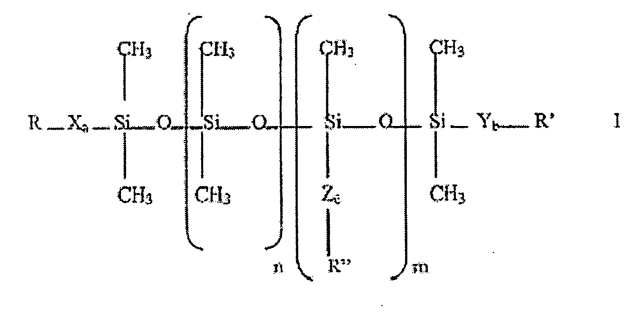 dans laquelle m et n valent indépendamment de 1 à 2 000, de préférence de 1 à 500 et plus préférablement de 1 à 200, a, b et c valent indépendamment 0 ou 1, et X, Y et Z sont choisis parmi
-O-;
-O-(CH₂)₁₋₃₀-, ce groupement étant au moins un groupement linéaire, ramifié et comportant au moins un cycle ;
-(CH₂)₁₋₃₀-, ce groupement étant au moins un groupement linéaire, ramifié et comportant au moins un cycle;
-CH₂-CH₂-CH₂-O-;
-CH₂-CH₂-CH₂-O-CH₂-CHOH-CH₂- ;
-CH₂-CH₂-CH₂-O-CH₂-CHOH-CH₂-O- ;
-CH₂-CH₂-CH₂-O-CH₂-CHOH-CH₂-N- ;
et R, R' et R" sont indépendamment au moins l'un des constituants choisis parmi l'hydrogène, un groupe alkyle en C₁ à C₁₀₀, un groupe aryle en C₆ à C₃₀, un groupe aralkyle en C₇ à C₃₀, un groupe alkaryle en C₇ à C₃₀, un groupe hydroxyalkyle en C₁ à C₃₀, un groupe polyhydroxyalkyle en C₃ à C₂₀₀, un polyéther ayant 2 à 200 motifs oxyalkylène en C₁ à C₁₅ identiques ou différents, un groupe aminoalkyle en C₁ à C₃₀, polyiminopolyalkylène ayant 1 à 20 motifs alkylène en C₂ à C₁₅ identiques ou différents, polyiminopolyoxyalkylène ayant 1 à 20 motifs oxyalkylène en C₂ à C₁₅ identiques ou différents, ammonium quaternaire en C₃ à C₃₀ éventuellement complètement ou partiellement ionisé avec au moins un anion, bétaïne en C₄ à C₃₀, carboxyle éventuellement complètement ou partiellement ionisé avec un cation approprié quelconque, polycarboxyalkyle en C₄ à C₃₀ éventuellement complètement ou partiellement ionisé avec au moins un cation, sulfo éventuellement complètement ou partiellement ionisé avec au moins un cation, thiosulfo éventuellement complètement ou partiellement ionisé avec au moins un cation, époxyde ; glycidyle, acrylate, ester en C₁ à C₃₀, polyester constitué de 2 à 200 motifs monomères de diester et de diacide en C₂ à C₁₅, et des esters d'acides inorganiques, toutes les chaînes alkyle étant au moins une parmi des chaînes linéaires, ramifiées, et comprenant au moins un cycle.

2. Une composition selon la revendication 1, dans laquelle le siloxane est choisi parmi ceux de formule I où a, b et c valent tous 1 et X, Y et Z sont choisis parmi
-O-(CH₂)₁₋₃₀-, ce groupement étant linéaire ou ramifié;
-(CH₂)₁₋₃₀-, ce groupement étant linéaire ou ramifié;
-CH₂-CH₂-CH₂-O-CH₂-CHOH-CH₂-
et R, R' et R" sont indépendamment au moins l'un des constituants choisis parmi l'hydrogène, un groupe hydroxy, un polyéther ayant 2 à 200 motifs oxyalkylène en C₂ à C₆ identiques ou différents, sous réserve que si plus d'un type de motif oxyalkylène est présent, alors au moins deux de chaque motif doivent être présents ; un groupe ammonium quaternaire en C₃ à C₃₀ éventuellement complètement ou partiellement ionisé avec au moins un anion, bétaïne en C₄ à C₃₀, carboxyle éventuellement complètement ou partiellement ionisé avec au moins un cation, sulfo éventuellement complètement ou partiellement ionisé avec au moins un cation, un groupe thiosulfo éventuellement complètement ou partiellement ionisé avec au moins un cation, glycidyle et acrylate, toutes les chaînes alkyle étant au moins une parmi des chaînes linéaires, ramifiées, et comprenant au moins un cycle.

3. Une composition selon la revendication 1 ou 2, dans laquelle le siloxane est choisi parmi ceux de formule I, où m et n valent indépendamment de 1 à 200, a, b et c valent tous 1, et X, Y et Z sont choisis parmi
-O-(CH₂)₁₋₁₂- ;
-(CH₂)₁₋₁₂- ;
-CH₂-CH₂-CH₂-O-CH₂-CHOH-CH₂- ;
et R, R' et R" sont indépendamment au moins l'un des constituants choisis parmi l'hydrogène, un groupe hydroxy, polyéther ayant 2 à 200 motifs oxyalkylène en C₂ à C₆ identiques ou différents, sous réserve que si plus d'un type de motif oxyalkylène est présent, alors au moins deux de chaque motif doivent être présents ; un groupe ammonium quaternaire en C₃ à C₃₀ éventuellement complètement ou partiellement ionisé avec au moins un anion, bétaïne en C₄ à C₃₀, carboxyle éventuellement complètement ou partiellement ionisé avec au moins un cation, glycidyle et acrylate, toutes les chaînes alkyle pouvant être linéaires ou ramifiées.

4. Une composition selon l'une quelconque des revendications 1 à 3, dans laquelle le siloxane est choisi parmi ceux de formule I, où m vaut de 1 à 30 et n vaut de 1 à 100, a, b et c valent tous 1, et X, Y et Z sont choisis parmi
-O-(CH₂)₁₋₆- ;
-(CH₂) ₁₋₆-;
-CH₂-CH₂-CH₂-O-CH₂-CHOH-CH₂- ;
et R, R' et R" sont indépendamment au moins l'un des constituants choisis parmi l'hydrogène, un groupe hydroxy, polyéther ayant 2 à 200 motifs oxyalkylène en C₂ à C₆ identiques ou différents, sous réserve que si plus d'un type de motif oxyalkylène est présent, alors au moins deux de chaque motif doivent être présents ; un groupe ammonium quaternaire en C₃ à C₂₀ éventuellement complètement ou partiellement ionisé avec au moins un anion, un groupe bétaïne en C₄ à C₁₀, et un groupe carboxyle éventuellement complètement ou partiellement ionisé avec au moins un cation, toutes les chaînes alkyle pouvant être linéaires ou ramifiées.

5. Une composition selon l'une quelconque des revendications 1 à 4, dans laquelle l'oxyde de polyalkylène est un oxyde de polyéthylène.

6. Une composition selon l'une quelconque des revendications 1 à 5, dans laquelle le poids moléculaire moyen en poids de l'oxyde de polyalkylène est de 100 000 à 8 000 000, de préférence de 2 000 000 à 5 000 000.

7. Une composition selon l'une quelconque des revendications 1 à 6, dans laquelle l'émulsion de paraffine est un mélange de paraffine émulsionnée par voie ionique, dont le point de fusion est de 45 à 51 °C et la taille des particules est inférieure à 2 µM.

8. Un procédé de modification des propriétés d'une composition cimentaire, comprenant l'adjonction à un mélange cimentaire fluide d'une composition selon l'une quelconque des revendications 1 à 7.

9. Un mélange cimentaire présentant des propriétés améliorées, dont la formulation comprend une composition chimique selon les revendications 1 à 7.
